(19) **Europäisches Patentamt / European Patent Office / Office européen des brevets**

(11) **EP 1 418 425 B1**

(12) **EUROPEAN PATENT SPECIFICATION**

(45) Date of publication and mention
of the grant of the patent:
**25.11.2009 Bulletin 2009/48**

(21) Application number: **03256784.4**

(22) Date of filing: **28.10.2003**

(51) Int Cl.:
*G01N 29/02* (2006.01) *G01N 9/00* (2006.01)

(54) **Gas content microsensor**

Mikrosensor zur Gasgehaltsmessung

Microdétecteur de la teneur en gaz

(84) Designated Contracting States:
**DE FR GB**

(30) Priority: **05.11.2002 EP 02257641**

(43) Date of publication of application:
**12.05.2004 Bulletin 2004/20**

(73) Proprietors:
• **Hok Instrument AB**
**721 31 Vasteras (SE)**
• **SENSONOR ASA**
**3192 Horten (NO)**
• **The Foundation for Technical and Industrial Research at the Norwegian Institute of Technology**
**0314 Oslo (NO)**

(72) Inventors:
• **Hok, Bertil**
**723 44 Västeras (SE)**
• **Gloersen, Peter**
**3179 Asgardstrand (NO)**
• **Bernstein, Ralph,**
**Sintef Elect. and Cybernetics**
**0314 Oslo (NO)**

(74) Representative: **Haley, Stephen**
**Gill Jennings & Every LLP**
**Broadgate House**
**7 Eldon Street**
**London EC2M 7LH (GB)**

(56) References cited:
**DE-A- 4 436 813  US-A- 5 386 714**
**US-A- 5 421 190  US-A- 5 817 922**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

The present invention relates to a sensor for monitoring gas content such as atmosphere air quality.

The subjective perception of air quality is based on several factors. Temperature is an important factor, with quite a narrow comfort interval, 18-25°C, and a considerably larger tolerance interval before health hazards occur. Perceived air quality is also highly influenced by humidity. However, air pollution is perhaps the most important health factor. Pollutants may have direct toxic effects, or may be harmful in the long term, due to accumulation, or indirect effects. Pollutants may be solid particles, liquid drops, or mixed gases. Animal respiratory airways include protective elements for separating and neutralising the effects of particulate pollutants, but most organisms are susceptible to the harmful effects of various gases.

Combustion of organic material is a major cause of air pollution. Atmospheric oxygen is consumed in the process, producing oxides of carbon and other elements which may have been present within the organic material. Gaseous carbon monoxide and dioxide ($CO$ and $CO_2$) are formed at a concentration ratio depending on oxygen supply, and combustion temperature. At very high temperatures, nitric oxides (NOX) are formed due to reaction between atmospheric nitrogen and oxygen. $CO_2$ is tolerable to concentrations as high as a few percent, whereas $CO$ and NOX are highly toxic with significant health effects at a concentration within the ppm (parts per million) range. Of course, human activity also involves a combustion process, respiration, resulting in emission of $CO_2$ and other air pollutants.

It is a object of the present invention to provide early detection of deteriorating air quality. Early detection may prevent health hazards by providing an alert, or by controlling ventilation to avoid exposure to polluted air. It may also save energy by replacing preventive ventilation with that of demand control. Since potential sources of air pollution are abundant and unpredictable in terms of occasion and location, early detection of deteriorating air quality should preferably be provided by low cost devices, which could be distributed in large numbers to selectable locations. The devices should be reliable, able to communicate electronically with other system components, and simple to install and use, and should allow unattended operation during long periods of time.

The need for early detection of deteriorating air quality has long been recognised. The approach taken has been to detect specific pollutants, such as combustible gases, $CO$ and carbon hydrates. The preferred detection principle is to induce a local combustion process at the surface of catalytic material. Occurrence of the local exothermal process may be detected either by its reversible effect on the material and/or by the generated heat. This class of catalytic sensors has been successfully industrialised and incorporated in gas warning systems. A reasonable compromise between cost and performance has been obtained by combining the semiconducting and catalytic properties of tin oxide with additives of noble metals, such as platinum and palladium. A number of such catalytic sensors are commercially available from several manufacturers.

However, the catalytic class of air quality sensors suffers from fundamental limitations with respect to reliability and long term use, due to the deleterious effects of some pollutants which may result in loss of sensitivity. 'False silence' is a dangerous error in alarm systems, and requires expensive counter measures. The fundamental character of the problem lies in the fact that this type of sensor is relying on a fragile reversible chemical interaction which may be overridden by irreversible chemical reactions.

Using physical detection principles ratherthan chemical eliminates the problem of chemical 'intoxication' of the sensor. Detection of a specific or general physical property may be performed in a passive way, with little or no interaction with the gas on the molecular level. When specificity, i.e. the identity, as well as the concentration, of a pollutant, is required, it is necessary to seek properties that are unique.

Infrared absorption spectroscopy offers an opportunity for specific detection of pollutants, due to the fact that molecular vibrations and rotations give rise to characteristic absorption spectra in the infrared wavelength range, which may be utilised as sensor principle. For example, $CO_2$ exhibits strong absorption in a relatively narrow band at 4.3$\mu$m. Infrared spectrometers are precision instruments, including an infrared emitter, an appropriately designed measuring cell allowing gas exchange and controlled propagation of infrared radiation, a wavelength dispersive element, and one or several detectors. The high mechanical and optical precision required has lead to relatively high cost, and there is a need for repeated calibrations during the life time of the system.

In many applications, including the systems for alarm and ventilation control discussed above, the requirements on specificity are relaxed. The exact nature of the pollutant may not be of interest. If the sensor output signal is used for controlling a valve or a fan motor, the desired action may be identical, regardless of the polluting species. The specificity with respect to various types of gases should not, however, be mixed up with the requirement of minimal cross sensitivity to 'general' environmental factors such as temperature, pressure, humidity, etc, which may interfere with the measurement.

In applications with relaxed specificity requirements, it is possible to use a general physical property for detection. The fields of mechanical and acoustic metrology offer such opportunities. An obvious possibility is to employ the fact that most pollutant molecules are heavier than the average molecule mass of air, which is dominated by the relatively small molecules of nitrogen and oxygen. Density at constant temperature and pressure is directly related to the average molecular mass M of a gas mixture, and the velocity of sound c is given by

$$c = (Rt\gamma/M)^{\frac{1}{2}} \qquad (1)$$

i.e. dependent on the absolute temperature T but essentially independent of pressure (the general gas constant R is 8.3143 J/mol K and $\gamma$ is the ratio of specific heat at constant volume and pressure, respectively). A pollutant at concentration $X_x$ and with a molecular mass $M_x$ somewhat higher than the average molecular mass of air $M_{air}$ will thus contribute to decrease the velocity of sound according to the relation

$$\Delta c/c = -M_x/2(M_x\, M_{air})^* X_x \qquad (2)$$

which holds for small variations ($\Delta c/c \ll 1$). The velocity of sound may be accurately determined by measuring the transit time of an acoustic pulse, or indirectly by measuring the resonant frequency in a standing wave arrangement according to well-known acoustic principles. Sensors for air quality control and other applications based on the measurement of the sound velocity are commercially available, but are still not adapted to high volume applications due to relatively high production cost.

US 5386714 forms a starting point for the preamble of claim 1 and discloses a density sensor comprising a cavity which is divided into two chambers by a diaphragm and which employs piezoelectric devices to excite and sense vibrations. DE-A-4436813 teaches a device for measuring the frequency in two chambers using resonance sensors, in order to indicate the composition of the gas in the chambers.

The foreseen widespread use of sensors for the early detection of deteriorating air quality has been hindered by the problems outlined above. Despite large efforts long the indicated development lines, no immediate solution has been disclosed up to now. It is a object of the present invention to present such a solution.
According to the present invention, there is provided a sensor for monitoring gas content, the sensor comprising:

> a housing defining at least two cavities;
> a resonator positioned in each of the cavities, each of the resonating structures having a resonant frequency dependent upon the speed of propagation of sound through a gas in its respective cavity, the resonators being physically separated and having substantially identical resonance modes and frequencies;
> means for exciting the resonators to generate output signals therefrom; and
> means for comparing the output signals from each of the resonators and outputting a comparison signal indicative of one or more differences between the resonant frequencies of the at least two resonators and the relative gas content of the cavities characterised in that:

> the sensor is formed from a micromachined silicon structure, and the two resonators are located in a mutual vicinity of less than approximately 1 mm.

The differences may be based upon a simple subtraction, or may be based upon quotients, averages, etc.

The sensor may further comprise a passageway associated with each cavity; and means for controlling flow of atmospheric gas into the cavities via their respective passageways.

The resonator structure may include at least one compliant element and at least one inertial element.

The resonator structure may include at least one spring element and at least one perforated mass element.

The sensor may further comprise at least one filter unit positioned to prevent entry of solid and liquid contaminants into at least one of the cavities.

The means for exciting the resonating structures and for comparing the output signals may be provided by at least one application specific integrated circuit (ASIC), and the ASIC may further comprise at least one of a component for self-diagnostics, a component for digital communication, and a component for advanced signal processing.

The sensor may further comprising a pressure equalization member positioned between the cavities.

The sensor device of the invention solution provides more than a tenfold improvement with respect to production cost compared to alternative solutions, more than a tenfold improvement of quantifiable reliability, such as mean time between failure (MTBP), a hundredfold improvement in terms of physical size (reduced weight/volume), and a thousand-fold in terms of reduced power consumption.

An example of the present invention will now be described with reference to the accompanying drawings, in which:-

> Figure 1, the functional elements of an example sensor present invention and their interrelation are illustrated; and
> Figure 2 depicts a preferred embodiment of the present invention.

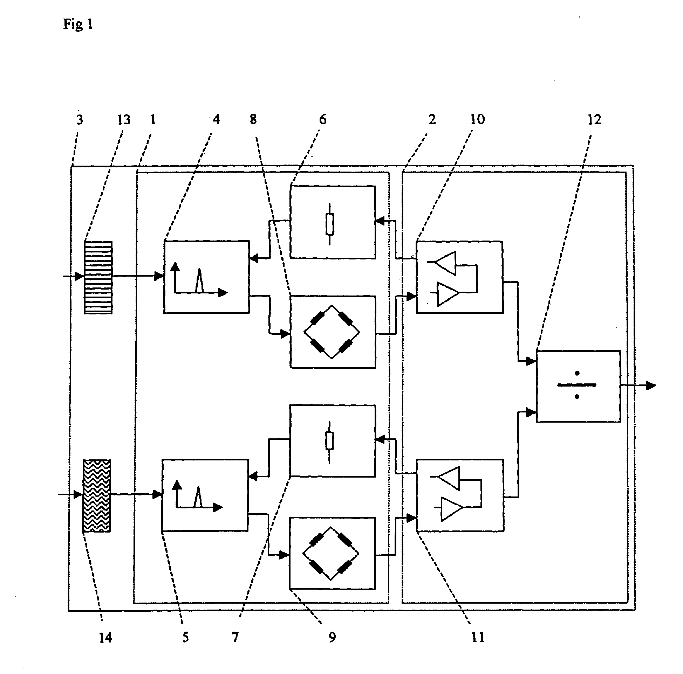

Figure 1 illustrates the functional blocks of an example sensor of the present invention. The microsensor is built up from three physically free-standing elements: These are an sensor element 1, which includes the basic sensor function, an application specific integrated circuit (ASIC) 2, including means for transferring the sensor infonnation into an electronic signal, and a package 3, enabling environmental protection of elements 1 and 2 with maintained sensing function as well as means for access to the surrounding gas atmosphere or other measuring points, and communicating electrical signals to external systems. The sensor element 1 makes use of a differential arrangement, with two nearly identical channels, operating in parallel.

The use of differential or relative measurement is based on the fact that 'air quality' is not an absolute entity. Differential measurements can be performed in one of three ways: (i) True differential, where input signals are provided at two separate points of measurement. (ii) Relative measurements against an absolute reference signal, i.e. a signal source which is reproducible in all aspects. (iii) Relative measurements against a 'floating' reference, i. e. a signal source that may be variable. In the following, it will be shown that a sensor according to the invention may operate according to any of these schemes, depending on the actual application. In all cases, operating two identical measuring channels and relating their results is suitable from the point of view of minimising the effects of undesired signal inputs of various sources. However, small size is an imperative requirement for a differential arrangement, otherwise spatial gradients of undesired inputs, such as temperature, will become a problem. Furthermore, high fabrication precision is required so that the measuring channels operating in parallel have equal characteristics. A contradicting requirement is that fabrication cost must be kept low, in particular when it comes to the marginal cost increase of producing two measuring channels compared to one. As will become evident from the following detailed description, these problems have been satisfactorily solved in the present invention.

The package 3 includes passages 13, 14 for air exchange between the point, or points, of measurement and two separate microcavities including resonators 4, 5 within the sensor element 1. The passages 13, 14 will typically define a significant functional difference for the two sensing channels operating in parallel. For example, the difference may be that the gas permeability for one of the passages 13, 14 is significantly smaller than the other. Then the output signal of the low permeability channel will correspond to the average signal over time of the high permeability channel. Such an arrangement will be useful in situations where the air quality sensor is used for detecting transient occurrences of deteriorating air quality, which may be the case in vehicles. The permeabilities of the passages 13, 14 should be pre-determinable or controllable to the extent that the low permeability channel is set to a time constant considerably longer than the maximum duration of a measurement period, whereas the time constant of the high permeability channel is set to the demand on response time. In the former application mentioned, the former may be counted in hours, the latter in less than a second. In applications for indoor air quality control, the corresponding time constants may be counted in days and minutes.

The outlined arrangement of passages 13, 14 with pre-determinable or controllable, highly differing permeabilities corresponds to either the case of an absolute reference, (ii) above, or a floating one, (iii) above. The absolute reference would result if one of the passages is essentially impermeable to gas, whereas the floating reference is valid if the reference possesses a certain permeability, which is so small that the output signal from the reference channel will not respond quickly enough to the anticipated signals. Case (iii) is useful in applications where undesired input variations can be made much slower than the desired one but cannot be eliminated. Such situations often prevail when it comes to undesired inputs, such as temperature and humidity. Temperature variations may be slowed down by proper dimensioning of thermal mass and isolation of the sensor assembly. The influence of humidity variations can be slowed down by the use of humidity traps, such as a material like cellulose with high absorption capability for water.

Case (i) corresponds to a case of actual differential measurements between two points of measurement. Such situations are frequent in applications of air quality sensors. For example, differential measurements between the inlet and outlet channels of a ventilation system is useful for demand controlled ventilation. As long as outlet air has acceptable quality. Fans may be operating at low speed, increasing as the signal from the outlet channel indicates that a source of pollution, such as respiring people, are present within the premises.

As indicated in Fig 1, the signal conversion from the physical to the electronic domain takes place in a pair of physically separated, but nearly identical resonators 4, 5. Micro-acoustic resonators may be defined using principles established by Kundt and Helmholtz the century. A Kundt resonator is defined by standing waves due to reflection, and the standing wave pattern will be dependent on the sound velocity according to well-known relations. Standing waves between solid walls a millimeter apart will occur at multiples of 170 kHz (assuming c=340 m/s), and the frequencies will slightly shift following the entrance of a pollutant. The quality factor of the resonance will depend on a number of factors, such as influence from scattering and absorption.

A Helmholtz resonator is built up by the combination of a pair of compliant and inertial elements, such as a volume cavity and a neck. The angular resonance frequency is linearly related to the velocity of sound c, with a proportionality constant determined by the device geometry:

$$\omega_r = c(S/lV)^{1/2}$$

where V is the volume of the cavity, and S and l are the area and length of the neck. respectively. Setting $V=0.1mm^3$, $S=0.01mm^2$, and $t=0.1mm$ gives $f_r=w_r/2\pi=54kHz$, again assuming c=340m/s. By proper dimensioning of V, S and l, it is thus possible to 'tune' a microacoustic resonator to a desired operating frequency, and it is also possible to fine tune one resonator to another, matching them to provide zero frequency difference when exposed to an identical gas mixture.

In both examples of resonator 4, 5 embodiments, changes in resonant frequency are related to a change in composition of the gases in the surrounding atmosphere, or other measuring points with gas communication to the sensor element 1. The preferred resonator implementation is dependent upon the actual application, and since air quality control may be applied to so many different situations with specific requirements the detailed implementation may vary from one application to another. The Helmholtz implementation may be preferred when high accuracy and resolution is required. As already indicated, using velocimetry ratherthan densitometry reduces the cross dependence on hydrostatic pressure. In both cases, such dependence can be minimised by introducing a pressure equalising element between the two passages 13,14, consisting of a resilient, but impermeable membrane, such as an ultra-thin metal film deposited on an elastomer membrane.

The sensor element 1 also includes means for excitation 6, 7 and detection 8, 9 of the resonators 4, 5. Imposing acoustic or mechanical vibrations may be performed by piezoelectric, electrostatic, electrothermal elements. For detection, piezoelectric, capacitive or piezoresistive elements may be used. The choice is governed both by the efficiency of transformation, and by the compatibility with fabrication methods. Piezoelectric materials arc not included in standard semiconductor processes, and do not represent a first hand choice on these grounds. Electrostatic excitation and capacitive detection methods are compatible with many MEMS manufacture processes, and are favourable with respect to power consumption. On the other hand, unless high drive voltage is acceptable, the excitation structure must be extremely thin, imposing high demands on the manufacture process. Electrothermal or resistive excitation ('Joule heating') and piezoresistive detection are both compatible with standard MEMS processes, by integrating diffused or thin film resistors in the device structure, and will provide adequate power efficiency and detectability.

Electrothermal excitation elements 6, 7 may operate from one or both of two different mechanisms. If the resistor element is diffused into a thin diaphragm structure, dissipating heat will cause bending or stretching of a diaphragm or spring structure according to its thermal coefficient of expansion, which will cause it to vibrate, following the time variation of the excitation current. Diaphragm vibrations will, in turn, give rise to pressure and velocity variations in the adjacent gas. A second mechanism for generating acoustic pressure in a gas is direct heating of the gas by the resistor element. Which one of the mechanisms will dominate is highly depending on geometry and other design details.

Piezoresistive detection of resonant vibrations is based on the piezoresistive effect present in several semiconductors, including silicon, by which mechanical strain is associated with a variation in resistivity. The detectors 8, 9 are basically Wheatstone bridges, with four diffused resistors located on a diaphragm or spring structure in such a way that two resistors are elongated by a certain strain evolving from induced vibrations, whereas two are compressed. Vibrations of the structure will then unbalance the bridge, and a net output signal will be produced.

The sensor element 1 can include all sub-elements 4-9 within a single physical embodiment which includes a micromachined silicon structure for definition of high precision elements, such as resistor layers, interconnecting layers, and thin diaphragms for efficient mechano-acoustic coupling. Due to the high level of standard of microelectronic and MEMS fabrication processes, the intricacy of such structures can be extremely high. High resolution photolithography defines the exact lateral geometry, and selective etch-stop techniques combined with drive-in diffusion of dopants define vertical thicknesses. For elements of submillimeter size, absolute tolerances less than a micrometer will provide adequate precision.

MEMS processes are based on single crystalline silicon wafers which typically have a diameter of 150 mm, and include several thousands of sensor elements, being processed in parallel, each sensor element consuming 5-10 mm$^2$ of wafer area depending on the actual design. To incorporate cavity structures, wafers are bonded together without adhesives. Direct wafer bonding techniques are available for bonding silicon to silicon, and between borosilicate glass and silicon. MEMS processes thus have capability and capacity to produce very large numbers of sensor elements at very low cost, despite their relatively complex and precision demanding structure.

In the differential arrangement of the sensor element 1 depicted in Fig 1, the two resonators 4, 5 are favorably located in closest possible mutual vicinity, typically less than a millimeter, within the single physical embodiment provided by the silicon, or silicon-glass structure as indicated above. By this arrangement, the influence of environmental disturbances, such as temperature, will be minimised. In cases of extreme temperature variations, such as in automotive applications, additional temperature compensation techniques may be necessary. By separate temperature measurements, it is possible to provide both offset and calibration factor correction. It is also possible to use thermostat temperature control of the sensor.

The ASIC 2 as depicted in Fig 1 includes the necessary electronic circuitry required for operating a sensor according to the invention. Resonators 4, 5 with associated drivers 6, 7 and detectors 8, 9 are preferably incorporated in two oscillator circuits 10, 11, in which the oscillating frequencies are controlled by the resonance frequencies. A simple solution is to let the resonator serve as feedback network of an amplifier, thereby forming a self oscillating loop (SOL). Another possibility is to use a phase locked loop (PLL), in which a phase comparator, a low pass filter, a voltage controlled oscillator (VCO) and the resonatorforms a closed oscillating loop. Improved immunity to noise and interference is then attained at the price of somewhat higher complexity. Typically, the operation and resonance frequencies of the sensor according to the invention may be in the interval 50 kHz to 1 MHz. The frequency difference between the two measuring channels, i.e. the signal corresponding to measured air quality, may be as small as 0.1 to 10 Hz.

The output signals from the oscillators 10, 11 are fed to a comparator element 12, performing a comparative operation on the two input signals. The comparator 12 can be a mixer element, the output signal of which corresponds to the difference between the two resonance frequencies. A mixer element is basically one with a nonlinear relationship between inputs and output combined with a low pass filter, producing a signal corresponding to the frequency difference between the two inputs. Another possible comparative operation is to form the ratio between the two frequencies. This operation can be readily implemented using a digital 'divide by N' counterwhere the denominator input is controlling the number of divisions taking place in the counter. Using digital circuitry, a number of possible alternatives arise for the implementation of comparative operations.

Depending on the actual application, the ASIC 2 may also include elements for more advanced signal processing, such as performing self calibration and self diagnostics, and even self repair by using redundant functions. In some applications, digital communication circuits can also be incorporated, with electronic circuitry for communication control.

Integrating electronic functional elements on a single silicon chip is advantageous from several aspects. Firstly, reliability is improved due to the reduced number of interconnections compared to a design using discrete standard components. Cost is decreased due to simplified assembly. Also, the sensor becomes more user friendly due to the higher degree of automation. From a technical point of view, some of the modular elements may be implemented in discrete form, and assembled on a printed circuit board.

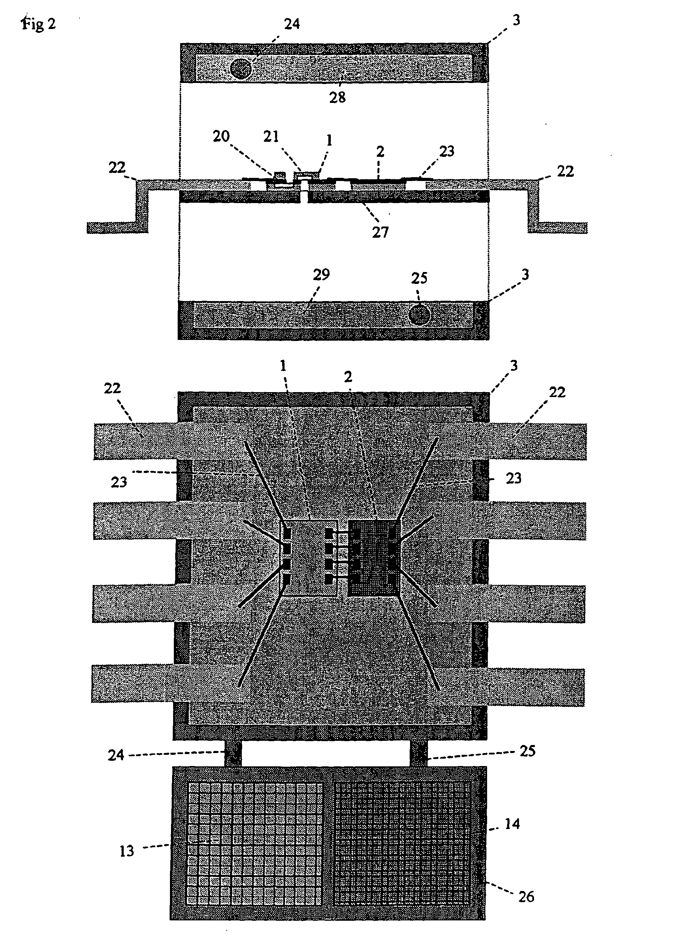

Figure 2 illustrates an embodiment of a sensor according to the invention. The basic modules of the sensor element 1, the ASIC 2 and the package 3 are clearly discernible. The package 3 is welded or glued together from an upper and lower lid structure, to which a lead frame 22 is attached. Thin wires 23 are bonded to interconnecting pads on the sensor element 1 and the ASIC 2, and connected to the lead frame 22.

The dual cavities 20, 21 of the sensor element 1 are separated by their connections upwards and downwards and by the separating floor 27, and will allow gas exchange to the upper and lower parts of the package, respectively. The floor 27 will thus divide the package 3 into two separate compartments 28, 29, each of which allow exclusive gas exchange of one of the cavities 20, 21. By openings 24, 25 in the respective parts of the package forming adequate air passages, both compartments 28, 29 may be accessible from outside the package 3 without gas mixing between the two inlets.

The passages 24, 25 connect to a dedicated filter module 26 which includes application specific filters allowing gas exchange but excluding particles and liquid drops which by deposition on the walls of the interior of the sensor element could result in long term drift, or even catastrophic failure.

The gas permeability of solid walls of different materials may vary by as much as eight orders of magnitude. Glass, ceramics and most metals could be considered impermeable in all practical aspects discussed here. Such materials may therefore be used for designing an absolute reference channel, according to the discussion above. Polymer or elastomer membranes which are more or less permeable to gases may be used as filter elements for the measuring channel and a floating reference. Between different materials and filter dimensions, it is possible to pre-determine the permeability and thus set it to the desired response time, in the case of the measuring channel, or the averaging time constant, in the case of the floating reference channel'. More elaborately, by using micro-valves to close or open certain paths for gas permeation, the corresponding penneabilities and time constants could be controlled in real time.

The filter unit 26 may be a separate, exchangeable module as indicated in Fig 2, or may be an integral part of the package 3. The former design may be preferred when it is anticipated that filter modules should be replaced during the life time of the sensor, due to clogging of smoke particles, soot, dust, aerosols etc. The passages 24, 25 may, of course, also include connectors of one of various kinds to tubing or other units.

The polymer structures constituting the package 3 and the filter module 26 are preferably fabricated by injection moulding. This allows for relatively complex geometries which will minimise the time required for device assembly and quality testing. In fact, the package and module geometries discussed herein are similar to devices already in almost fully automatic high volume production. The application specific parts, such as filter membranes of different polymer materials may be replaced between production batches, with little influence on the total production cost. The fabrication cost of the sensor according to the invention is therefore lower by more than an order of magnitude compared to devices relying on conventional precision mechanics.

The modular structure of the sensor according to the invention allows flexibility and adaptivity to specific requirements, while maintaining the scale advantages of high volume automatic production. The adaptivity may be used for tailoring the properties of the filter 26 and passage 24, 25 functions to specific applications.

## Claims

1. A sensor (1) for monitoring gas content, the sensor comprising:

   a housing (3) defining at least two cavities (20,21);
   a resonator (4,5) positioned in each of the cavities, each of the resonating structures having a resonant frequency dependent upon the speed of propagation of sound through a gas in its respective cavity, the resonators being physically separated and having substantially identical resonance modes and frequencies;
   means (6,7) for exciting the resonators to generate output signals therefrom; and
   means for comparing (12) the output signals from each of the resonators and outputting a comparison signal indicative of one or more differences between the resonant frequencies of the at least two resonators and the relative gas content of the cavities **characterised in that**:

   the sensor is formed from a micromachined silicon structure, and the two resonators (4,5) are located in a mutual vicinity of less than approximately 1 mm.

2. A sensor (1) according to claim 1, further comprising a passageway (13,14) associated with each cavity (20,21); and
   means for controlling flow of atmospheric gas into the cavities via their respective passageways.

3. A sensor (1) according to claim 1 or 2, wherein the physical characteristic is density.

4. A sensor (1) according to claim 3, wherein each resonator structure includes at least one compliant element and at least one inertial element.

5. A sensor (1) according to any preceding claim, wherein the resonator structure includes at least one spring element and at least one perforated mass element.

6. A sensor (1) according to any preceding claim, further comprising at least one filter (26) unit positioned to prevent entry of solid and liquid contaminants into at least one of the cavities (20,21).

7. A sensor (1) according to any preceding claim, wherein the means for exciting the resonators and for comparing the output signals is provided by at least one application specific integrated circuit (ASIC) (2).

8. A sensor (1) according to claim 7, wherein the ASIC (2) further comprises at least one of a component for self- diagnostics, a component for digital communication, and a component for advanced signal processing.

9. A sensor (1) according to any proceeding claim further comprising a pressure equalization member positioned between the cavities (20,21).

## Patentansprüche

1. Sensor (1) für das Überwachen von Gasgehalt, wobei der Sensor Folgendes umfasst:

   ein Gehäuse (3), das mindestens zwei Hohlräume (20, 21) umschreibt;
   einen Resonator (4, 5), der in jedem der Hohlräume positioniert ist, wobei jedes der resonierenden Bauteile eine Resonanzfrequenz aufweist, die von der Ausbreitungsgeschwindigkeit von Schall durch ein Gas im seinem jeweiligen Hohlraum abhängig ist, wobei die Resonatoren körperlich von einander getrennt sind und im Wesentlichen identische Resonanzmodi und -frequenzen aufweisen;
   Möglichkeiten (6, 7) zum Anregen der Resonatoren zum Erzeugen von Ausgabesignalen daraus; und
   eine Möglichkeit zum Vergleichen (12) der Ausgabesignale aus jedem der Resonatoren und Ausgeben eines Vergleichssignals, das für einen oder mehrere Unterschied(e) zwischen den Resonanzfrequenzen der mindestens zwei Resonatoren und dem relativen Gasgehalt der Hohlräume indikativ ist, **dadurch gekennzeichnet, dass**:

   der Sensor aus einem mikrobearbeiteten Siliciumbauteil gebildet ist und die beiden Resonatoren (4, 5) sich in einer gegenseitigen Nähe von weniger als etwa 1 mm befinden.

2. Sensor (1) nach Anspruch 1, des Weiteren umfassend einen Durchgang (13, 14), der mit jedem Hohlraum (20, 21) verbunden ist; und
   eine Möglichkeit für das Regulieren der Strömung von atmosphärischem Gas in die Hohlräume durch ihre jeweiligen Durchgänge.

3. Sensor (1) nach Anspruch 1 oder 2, wobei die physikalische Eigenschaft die Dichte ist.

4. Sensor (1) nach Anspruch 3, wobei jedes Resonatorbauteil mindestens ein konformes Element und mindestens ein Trägheitselement umfasst.

**5.** Sensor (1) nach einem der vorhergehenden Ansprüche, wobei das Resonatorbauteil mindestens ein Federelement und mindestens ein perforiertes Massenelement umfasst.

**6.** Sensor (1) nach einem der vorhergehenden Ansprüche, des Weiteren umfassend mindestens eine Filter- (26) Einheit, die positioniert ist, um den Eintritt von festen und flüssigen Schmutzstoffen in mindesten einen der Hohlräume (20, 21) zu verhindern.

**7.** Sensor (1) nach einem der vorhergehenden Ansprüche, wobei die Möglichkeit zum Anregen der Resonatoren und Vergleichen der Ausgabesignale durch mindestens einen anwendungsspezifischen integrierten Schaltkreis (ASIC) (2) bereitgestellt wird.

**8.** Sensor (1) nach Anspruch 7, wobei der ASIC (2) des Weiteren aus mindestens einer Komponente zur Selbstdiagnose, einer Komponente zur digitalen Kommunikation und einer Komponente zur fortgeschrittenen Signalverarbeitung umfasst.

**9.** Sensor (1) nach einem der vorhergehenden Ansprüche, des Weiteren ein Druckausgleichteil umfassend, das zwischen den Hohlräumen (20, 21) positioniert ist.

**Revendications**

**1.** Capteur (1) destiné à surveiller la teneur en gaz, le capteur comportant :

un logement (3) définissant au moins deux cavités (20, 21) ;
un résonateur (4, 5) positionné dans chacune des cavités, chacune des structures résonantes ayant une fréquence de résonance fonction de la vitesse de propagation du son au travers d'un gaz dans sa cavité respective, les résonateurs étant séparés physiquement et ayant des modes et fréquences de résonance essentiellement identiques ;
des moyens (6, 7) destinés à exciter les résonateurs pour générer des signaux de sortie en provenance de ceux-ci ; et
un moyen destiné à comparer (12) les signaux de sortie en provenance de chacun des résonateurs et destiné à émettre un signal de comparaison indiquant une ou plusieurs différences entre les fréquences de résonance desdits au moins deux résonateurs et la teneur relative en gaz des cavités, **caractérisé en ce que** :

le capteur est formé à partir d'une structure en silice micro-usinée et les deux résonateurs (4, 5) sont situés en proximité mutuelle l'un de l'autre à moins d'environ 1 mm.

**2.** Capteur (1) selon la revendication 1, comportant par ailleurs un passage (13, 14) associé à chaque cavité (20, 21) ; et
des moyens pour contrôler l'écoulement du gaz atmosphérique dans les cavités par le biais de leurs passages respectifs.

**3.** Capteur (1) selon la revendication 1 ou la revendication 2, dans lequel la caractéristique physique est la densité.

**4.** Capteur (1) selon la revendication 3, dans lequel chaque structure de résonateur comprend au moins un élément élastique et au moins un élément inertiel.

**5.** Capteur (1) selon l'une quelconque des revendications précédentes, dans lequel la structure de résonateur comprend au moins un élément de ressort et au moins un élément de masse à perforations.

**6.** Capteur (1) selon l'une quelconque des revendications précédentes, comportant par ailleurs au moins un module filtre (26) positionné pour empêcher toute entrée de contaminants solides et liquides dans au moins l'une des cavités (20, 21).

**7.** Capteur (1) selon l'une quelconque des revendications précédentes, dans lequel le moyen destiné à exciter les résonateurs et destiné à comparer les signaux de sortie est mis en oeuvre par au moins un circuit intégré à application spécifique (ASIC) (2).

**8.** Capteur (1) selon la revendication 7, dans lequel l'ASIC (2) comporte par ailleurs au moins l'un parmi un composant pour autodiagnostic, un composant pour communication numérique, et un composant pour traitement de signal avancé.

**9.** Capteur (1) selon l'une quelconque des revendications précédentes, comportant par ailleurs un élément d'égalisation de pression positionné entre les cavités (20, 21).

Fig 1

Fig 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5386714 A

- DE 4436813 A